(19) Europäisches Patentamt
European Patent Office
Office européen des brevets

(11) **EP 2 516 138 B1**

(12) **FASCICULE DE BREVET EUROPEEN**

(45) Date de publication et mention de la délivrance du brevet:
**19.03.2014 Bulletin 2014/12**

(21) Numéro de dépôt: **10807607.6**

(22) Date de dépôt: **17.12.2010**

(51) Int Cl.:
***B29C 70/16*** *(2006.01)* ***B29C 70/22*** *(2006.01)*
***D03D 15/00*** *(2006.01)*

(86) Numéro de dépôt international:
**PCT/FR2010/052779**

(87) Numéro de publication internationale:
**WO 2011/086266 (21.07.2011 Gazette 2011/29)**

(54) **NOUVEAUX MATERIAUX INTERMEDIAIRES REALISES PAR ENTRECROISEMENT AVEC ENTRELACEMENT DE FILS VOILES**

NEUE VERBUNDMATERIALIEN MIT INEINANDER GREIFENDEN BÄNDERN

NEW INTERMEDIATE COMPOSITE MATERIALS HAVING INTERLOCKING RIBBONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2009 FR 0959428**

(43) Date de publication de la demande:
**31.10.2012 Bulletin 2012/44**

(73) Titulaire: **Hexcel Reinforcements**
**01120 Dagneux (FR)**

(72) Inventeurs:
• **BERAUD, Jean-Marc**
**F-38140 Rives (FR)**

• **MINNI, Jean-Christophe**
**F-74450 Le Grand Bornand (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A1- 1 046 666          EP-A1- 1 464 743**
**WO-A1-2005/047581     FR-A1- 2 580 003**
**FR-A1- 2 800 100          US-A1- 2007 066 171**

**Description**

La présente invention concerne le domaine technique des matériaux de renfort, adaptés à la constitution de pièces composites. Plus précisément, l'invention concerne un nouveau matériau intermédiaire pour la réalisation de pièces composites, par injection ou infusion ultérieure de résine thermodurcissable, un procédé de fabrication de pièces composites à partir d'un tel matériau, ainsi que les pièces composites obtenues.

La fabrication de pièces ou d'articles composites, c'est-à-dire comprenant, d'une part, un ou plusieurs renforts ou nappes fibreuse et, d'autre part, une matrice principalement de type thermodurcissable (« résine ») et pouvant inclure des thermoplastiques, peut, par exemple, être réalisée par un procédé dit "direct" ou "LCM" (de l'anglais Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions, en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Or, les propriétés mécaniques des pièces sont principalement liées à un paramètre qui est le taux volumique de fibres (TVF). Par ailleurs, dans ces secteurs, il est particulièrement important de disposer de matériaux qui, d'une part présentent une grande régularité, et d'autre part offrent des facilités de manipulation et de mise en oeuvre.

Dans ces secteurs, un grand nombre de préformes sont réalisées à partir de tissus (WO 94/12708 notamment) ou de tresses, notamment de forme cylindrique (EP 1 798 428 et US2007/0193439, par exemple). Pour améliorer la résistance à l'impact des pièces qu'il est souhaité de réaliser à partir de telles préformes, les inventeurs ont envisagé d'appliquer sur ces tresses ou tissus, un liant chimique pour améliorer les performances mécaniques des pièces obtenues et notamment leur résistance à l'impact.

Néanmoins, l'application d'un tel liant chimique d'amélioration de résistance à l'impact sur une forme telle qu'un mandrin de tressage n'est pas chose facile. En effet, se posent notamment la question de la continuité de ce liant et de la difficulté d'automatisation. De plus, l'application d'un liant chimique sur un tissu ou une tresse, peut limiter la déformabilité du matériau obtenu et donc sa mise en oeuvre sur des formes complexes.

Dans ce contexte, le matériau selon l'invention doit offrir des possibilités de conception pour des pièces composites de structures primaires ou secondaires présentant de bonnes propriétés mécaniques et également pour des pièces présentant un taux volumiques de fibres élevées.

Ce matériau intermédiaire se doit également d'être réalisé à un prix de revient concurrentiel et, de façon relativement aisée. Un des objectifs de l'invention est également de proposer un matériau dont la production soit facilement automatisable.

Le matériau selon l'invention se doit d'offrir des facilités de manipulation et de mise en oeuvre. Notamment, la présente invention se propose de fournir un nouveau matériau intermédiaire qui puisse être produit selon des formes complexes de type tresses de forme cylindrique ou complexe. Le matériau selon l'invention se doit également de pouvoir être produit sous la forme d'un tissu ou tresse qui présente une déformabilité satisfaisante.

Aussi, la présente invention concerne un matériau intermédiaire composé d'un ensemble de rubans entrecroisés avec entrelacement caractérisé en ce qu'au moins certains des rubans, et de préférence tous les rubans, nommés rubans voilés, sont composés d'une série de fils ou filaments de renfort qui s'étendent selon une direction parallèle à la longueur du ruban pour former une nappe unidirectionnelle qui est associée sur chacune de ses faces à un non-tissé en fibres thermoplastiques, ces deux non-tissés assurant la cohésion dudit ruban voilé grâce à leur caractère thermoplastique.

Diverses autres caractéristiques du matériau selon l'invention sont détaillées dans les revendications.

Le matériau selon l'invention est destiné à la réalisation de pièces composites par procédé direct. Aussi, la masse de non-tissés, au sein de chaque ruban voilé, représente de 3 à 10 % de la masse totale de chaque ruban.

L'invention a également pour objet un procédé de fabrication d'une pièce composite caractérisé en ce qu'il comporte les étapes suivantes :

a) disposer d'au moins un matériau selon l'invention,
b) éventuellement empiler différents matériaux selon l'invention et éventuellement les solidariser sous la forme d'une préforme,

c) ajouter, par infusion ou injection, une résine thermodurcissable,

d) consolider la pièce souhaitée par une étape de polymérisation/réticulation suivant un cycle défini en température et sous pression, suivi d'un refroidissement.

Selon un mode de mise en oeuvre particulier du procédé selon l'invention, la résine thermodurcissable est ajoutée par infusion sous une pression inférieure à la pression atmosphérique, notamment à une pression inférieure à 1 bar et, par exemple, comprise entre 0,1 et 1 bar.

Selon un autre de ses aspects, l'invention concerne les pièces composites susceptibles d'être obtenues selon un tel procédé, qui présentent notamment un taux volumique de fibres (TVF) de 50 à 63%, de préférence de 53 à 60%.

Diverses autres caractéristiques ressortent de la description faite ci-dessous en référence aux dessins annexés.

Les **Figures 1** et **2** sont, respectivement, une représentation schématique, en perspective, partiellement arrachée, et en coupe, d'un ruban utilisé dans le cadre de l'invention, dans lequel une nappe unidirectionnelle est associée à deux non tissés.

La **Figure 3** montre différentes constructions de tissage que peut présenter un matériau intermédiaire selon l'invention.

La **Figure 4** représente un matériau selon l'invention présentant une forme de tresse cylindrique.

Les **Figures 5A** et **5B** représentent un dispositif pour mesurer l'épaisseur d'une préforme formée de rubans, sous vide.

La **Figure 6** est une photographie d'un exemple de ruban qui peut être utilisé dans le cadre de l'invention, et met en évidence son bord bien net.

La **Figure 7** montre différentes formes de pièces qui peuvent être obtenues, à partir d'un matériau intermédiaire selon l'invention en forme de tresse cylindrique.

La **Figure 8** représente, de façon schématique, une vue d'ensemble d'un dispositif de réalisation d'un ruban associé sur chacune de ses grandes faces à un non-tissé.

La **Figure 9** illustre une construction de tissage, nommée armure sergé 2/2, utilisée dans les exemples.

La **Figures 10** donne les perméabilités en fonction du taux volumique de fibres, pour un matériau intermédiaire conforme à l'invention.

Les **Figures 11** à **15** montrent les performances mécaniques de pièces composites obtenues avec un matériau intermédiaire conforme à l'invention.

L'invention propose des matériaux réalisés par entrecroisement et entrelacement de rubans, dont certains au moins sont des rubans voilés. Dans le cadre de l'invention, les fils ou filaments unidirectionnels constitutifs des rubans sont associés à des non-tissés, avant leur entrecroisement avec entrelacement. Aussi, dans le matériau selon l'invention, chaque ruban voilé est associé à deux non-tissés sur toute sa longueur et, y compris au niveau des points de croisement et/ou entrelacement. L'entrecroisement avec entrelacement est, par exemple, réalisé par tissage ou tressage. Par rapport à un tissu qui serait associé après tissage à un liant chimique, par exemple sous la forme d'un voile, l'avantage du matériau selon l'invention réalisé à partir de bandes de fibres unidirectionnelles associées sur chacune de leurs faces à un non-tissé de fibres thermoplastiques, se situe, notamment, au niveau de la déformabilité, qui sera bien meilleure dans le cadre de l'invention, étant donné que les bandes peuvent bouger entre elles, alors que les fils sont bloqués par le liant chimique dans le cas d'un tissu traité après tissage ou d'une tresse traitée après tressage. Au sein du matériau selon l'invention, les rubans peuvent bouger les uns par rapport aux autres, étant donné qu'hormis la liaison mécanique obtenue par l'entrecroisement/entrelacement, il n'existe aucune autre liaison, notamment aucune liaison obtenu grâce à un liant chimique entre les rubans notamment par collage ou autre.

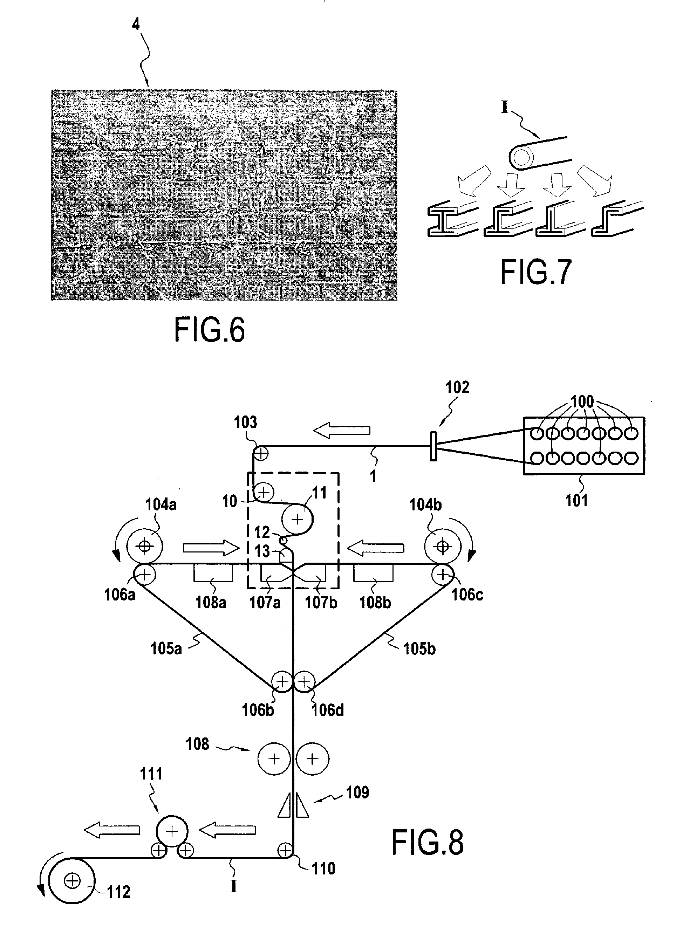

Par ailleurs, le fait d'utiliser directement des rubans porteurs de non-tissés qui vont apporter les propriétés mécaniques souhaitées à la pièce finale, offre de nombreuses possibilités de conception. Par exemple, le matériau selon l'invention peut directement être tressé sur un mandrin pour obtenir une tresse de forme cylindrique, puis être mis en forme par exemple par couture ou préformage afin de réaliser une préforme plus complexe, comme illustré notamment **Figure 7**. Le matériau selon l'invention peut également être directement tressé sur un mandrin de forme complexe, éventuellement en plusieurs couches successives.

De plus, le choix spécifique de rubans voilés, par rapport à d'autres rubans associés à un autre type de liant chimique tel qu'une poudre thermoplastique ou un liant pulvérisé « hot melt », comme proposé par la société Oxeon, permet d'obtenir par la suite, des pièces composites qui présentent de bien meilleures propriétés de résistance à l'impact.

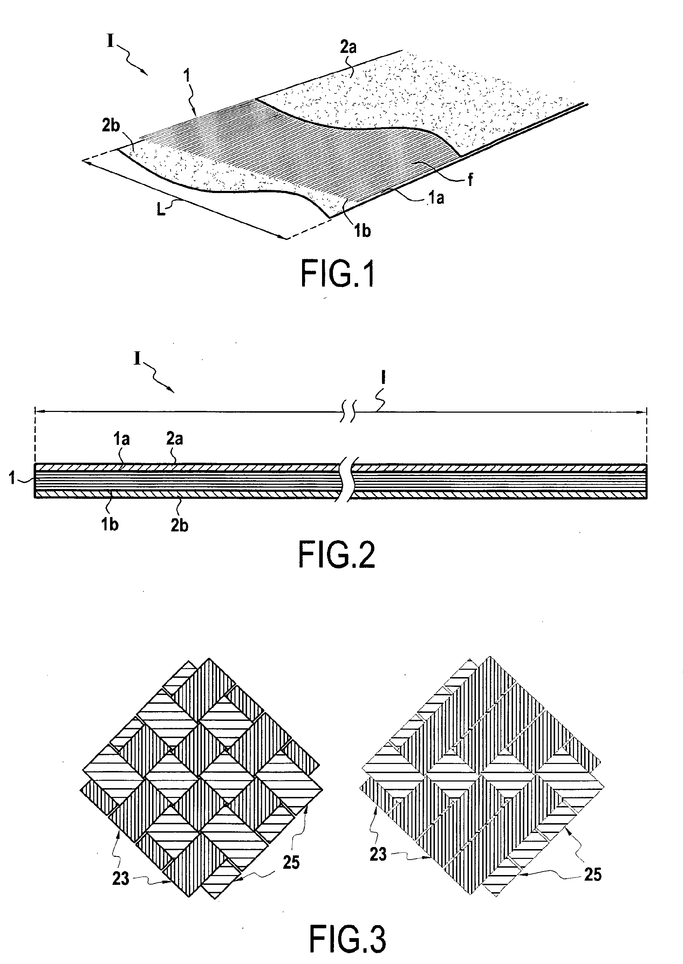

Dans le cadre de l'invention, par ruban ou bande, on entend un matériau en feuille qui présente une longueur, bien supérieure à sa largeur. De tels rubans peuvent notamment présenter des largeurs de 3 à 25 mm. Dans le cas des rubans voilés, ces derniers peuvent être réalisés à partir d'un ou plusieurs fils, un fil étant constitué d'un ensemble de filaments. Des rubans voilés de plus faible largeur peuvent même être obtenus dans le cas où un fil très fin de 1K ou 3K est utilisé. Dans la suite, on pourra également nommer une bande de fils ou filaments parallèles, bande de fibres parallèles. Comme le montre la **Figure 1,** les rubans voilés **I** fabriqués dans le cadre de l'invention présentent une longueur **I** et une largeur **L.** Ces rubans voilés sont constitués d'un ensemble de filaments **f** (cas d'un seul fil **1**) ou d'un ensemble de fils **1** (chacun constitué d'un ensemble de filaments) qui s'étendent parallèlement à la largeur du ruban. Un ruban voilé a une forme générale rectangulaire et est associé sur chacune de ses grandes faces **1a** et **1b** à un non-tissé (respectivement **2a** et **2b**), comme le montre la **Figure 2.**

Par non-tissé, qui peut également être nommé « voile », on entend classiquement un ensemble de fibres continues ou courtes disposées aléatoirement. Ces non tissés ou voiles pourront par exemple être produits par les procédés « Meltblow », « Spunlaid » ou « Electrospinning », bien connus de l'homme du métier. En particulier, les fibres constitutives du non-tissé peuvent présenter des diamètres moyens compris dans la gamme allant de 0,5 et 70 $\mu$m. Dans le cas d'un non-tissé de fibres courtes, les fibres peuvent présenter, par exemple, une longueur comprise entre 1 et 100 mm. L'utilisation de non-tissés qui présentent une couverture aléatoire et isotropique permet de conférer à chaque ruban voilé une cohésion uniforme et dans toutes les directions, contrairement à la mise en oeuvre de fils espacés, par exemple. Pour chaque ruban voilé, la liaison entre les non-tissés et la nappe unidirectionnelle a été préalablement assurée, par chauffage, en utilisant le caractère collant à chaud des non-tissés thermoplastiques, suivi d'un refroidissement. A titre d'exemple, les fibres constitutives des non-tissés sont, avantageusement, constituées d'un matériau thermoplastique, notamment choisi parmi : les Polyamides (PA : PA6, PA12, PA11, PA6,6, PA 6,10, PA 6,12, ...), Copolyamides (CoPA), les Polyamides - block ether ou ester (PEBAX, PEBA), polyphtalamide (PPA), les Polyesters (Polyéthylène téréphtalate -PET-, Polybutylène téréphtalate - PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phenoxys, les copolymères à blocs tels que les copolymères Styrène-Butadiene-Méthylméthacrylate(SBM), les copolymères Méthylméthacrylate-Acrylate de Butyl-Méthylméthacrylate (MAM) et leurs mélanges. Les non-tissés peuvent être constitués de fibres de même nature, mais également d'un mélange de fibres constituées de ces matériaux thermoplastiques. La matière est bien entendue adaptée aux différents types de systèmes thermodurcissables utilisés pour la constitution de la matrice, lors de la réalisation ultérieure des pièces composites.

Chaque ruban voilé utilisé pour la constitution du matériau intermédiaire selon l'invention présente, sur chacune de ses grandes faces, un non-tissé de fibres thermoplastiques qui lui assure sa cohésion. Notamment, à titre de non-tissé de fibres thermoplastiques, on peut utiliser des non-tissés commercialisés par exemple par les sociétés Protechnic (66, rue des Fabriques, 68702 - CERNAY Cedex - France) ou Spunfab Ltd. / Keuchel Associates, Inc. (175 Muffin Lane Cuyahoga Falls, OH 44223, USA).

Dans le cadre de l'invention, la nappe unidirectionnelle constituée de un ou plusieurs fils de renfort peut être en un matériau choisi parmi les matériaux suivants : carbone, verre, aramide, silice, basalte, céramique et leurs mélanges, ou tout autre matériau utilisé dans le domaine des matériaux composites, les fibres pouvant être naturelles ou synthétiques. Les fibres de carbone sont néanmoins préférées.

Au sein de chaque ruban, les filaments ou fibres de renfort sont disposés de manière à assurer une couverture quasi-totale sur toute la surface du ruban. En particulier, lorsque le ruban voilé est constitué d'une nappe unidirectionnelle de plusieurs fils, ceux-ci seront disposés bord à bord, avec un minimum, voir aucun manquement de matière (« gap » en anglais) ou chevauchement (« overlap » en anglais).

Un fil est en général constitué d'un ensemble de filaments et comporte, en général, dans le cas des fils de carbone, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Les fibres constitutives sont de préférence continues. Les fils présents au sein des rubans voilés présentent une section droite transversale sensiblement parallélépipédique ou elliptique et sont qualifiés de fils plats. Ces fils présentent une certaine largeur et épaisseur. A titre d'exemple, un fil plat de carbone de 3K et d'un titre de 200 tex présente généralement une largeur de 1 à 3 mm, un fil plat de carbone de 12K et d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm et un fil plat de carbone de 24K et d'un titre de 1040 tex, une largeur de 5 à 10 mm. Un fil plat de carbone de 3 000 à 24 000 filaments présentera donc le plus souvent une largeur de 1 à 12 mm. Pour certains modes de réalisation, les fils de carbone présents au sein des rubans voilés, présentent un titre compris entre 60 et 3800 Tex, et préférentiellement entre 400 et 900 tex. Avant l'association du ou des fils au non-tissés pour réaliser les rubans, il est possible d'étaler ou non les fils utilisés classiquement disponibles dans le commerce. A titre d'exemple, l'épaisseur de la nappe unidirectionnelle de carbone, au sein d'un ruban, peut être de 90 à 270 $\mu$m environ. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

Les rubans voilés tels que précédemment décrits, et dont certains exemples plus précis vont être donnés, par la suite dans la description et les exemples, sont utilisés, dans le cadre de l'invention pour fabriquer des matériaux intermédiaires, destinés à être associés à une matrice de résine thermodurcissable pour la réalisation ultérieure de pièces composites, pour l'aéronautique notamment. Dans les matériaux intermédiaires selon l'invention, ces rubans voilés sont superposés et entrecroisés avec entrelacement. Les matériaux intermédiaires selon l'invention sont, de préférence, constitués exclusivement de rubans voilés composés d'une série de fils ou filaments de renfort qui s'étendent selon une direction parallèle à la longueur du ruban pour former une nappe unidirectionnelle qui est associée sur chacune de ses faces à un non-tissé en fibres thermoplastiques, ces deux non-tissés assurant la cohésion dudit ruban voilé grâce à leur caractère thermoplastique. En particulier, les matériaux intermédiaires selon l'invention sont exclusivement constitués d'un tressage ou tissage de rubans voilés tels que plus précisément décrits dans la présente demande de brevet. Il n'est cependant pas exclu que dans les matériaux intermédiaires selon l'invention, ces rubans voilés soient combinés à d'autres rubans tels que des fils simples ou autres. En effet, ces rubans voilés peuvent, par exemple, n'être utilisés qu'en trame dans le cas d'un tissu, les fils de chaine étant classiques et non voilés, ou sur un fil sur deux dans le cas d'une tresse, de façon à ce que toute la surface de l'architecture textile soit couverte par au moins un ruban voilé.

Tout type de technique d'entrecroisement avec entrelacement peut être utilisé. De préférence, la couverture apportée par l'entrecroisement sera maximale. Avantageusement, le matériau selon l'invention présentera un facteur d'ouverture inférieur ou égal à 0,5%. Ce facteur d'ouverture peut être déterminé par la méthode décrite dans les exemples. Un tel facteur d'ouverture peut, notamment être plus facilement atteint lorsque les rubans voilés utilisés sont calibrés et/ou lorsque le matériau selon l'invention est constitué exclusivement de rubans voilés.

On peut, par exemple, utiliser toute technique de tissage, telles que, notamment celles décrites dans les documents WO 2006/0759961 et WO 98/46817. Dans les matériaux selon l'invention les rubans peuvent être tissés, selon différentes constructions, notamment du type armure taffetas (appelé aussi toile), sergée ou satin comme illustré **Figure 3** (partie gauche : taffetas et partie droite : satin) ou **9.** Les références **10** et **11** désignent respectivement les rubans de la trame et les rubans de la chaîne. Il est également possible d'utiliser la technique décrite dans la demande de brevet EP0670921 qui décrit un procédé de tissage amélioré dans lequel la trame est déroulée sans torsion, et où un système d'épanouissement par vibration peut, en plus, être appliqué au tissu obtenu pour augmenter son taux volumique de fibre en réduisant son facteur d'ouverture. Dans le cadre de l'invention, le matériau selon l'invention peut être obtenu selon un procédé de tissage qui peut mettre en oeuvre l'une ou l'autre de ces améliorations ou les deux en combinaison. L'utilisation d'un dévidage à la déroulée de la trame décrit dans ce document a l'avantage de ne pas ajouter de torsion au ruban qui peut ainsi rester plat dans le matériau intermédiaire tissé obtenu.

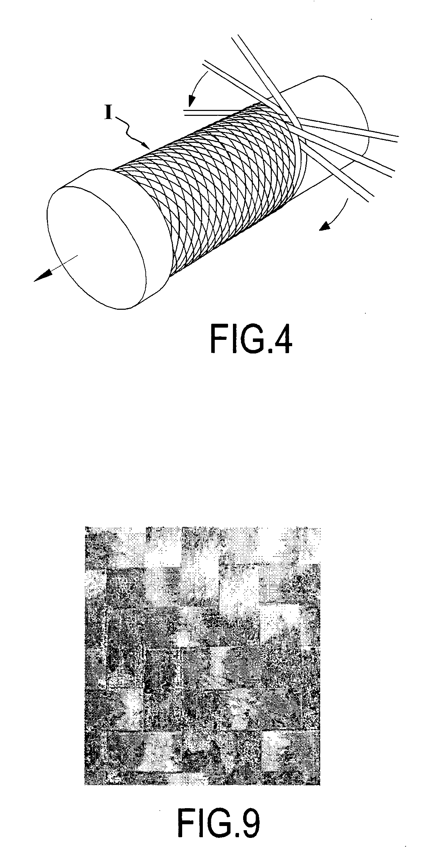

Le matériau selon l'invention peut également se présenter sous la forme d'une tresse, en particulier d'une tresse formant un cylindre comme présenté **Figure 4.** De telles tresses sont réalisées par tressage de rubans tels que précédemment décrits. Les techniques de tressage telles que décrites dans les documents EP 1 79 428 ou US 2007/0193439 peuvent notamment être mises en oeuvre. Dans ces techniques, un moyen robotisé vient placer un mandrin au centre d'une tresseuse, et balaye la .longueur de ce mandrin pendant le tressage, de sorte que la tresse recouvre le mandrin. Après plusieurs passages, le mandrin est recouvert de différentes couches de rubans tressés. Il est aisée de mettre en oeuvre des rubans utilisés dans le cadre de l'invention sur des tresseuses, spécialement si celles-ci sont optimisées pour tresser des fils plats. Une technique de tressage non symétrique mettant en oeuvre deux sortes de rubans, telle que décrite dans la demande WO 92/15740, peut également âtre utilisée. Il est également possible de coudre une tresse ouverte pour lui conférer une forme de cylindre ou toute autre forme complexe désirée.

Est décrit ci-après un type particulier de ruban voilé de fibres de carbone qui permet d'obtenir des matériaux intermédiaires selon l'invention qui vont permettre notamment de réaliser, ultérieurement, des pièces composites qui vont allier à la fois de bonnes propriétés mécaniques et un taux volumique de fibres élevé, propriétés recherchées notamment dans le domaine de l'aéronautique. Selon un mode de réalisation préféré, chaque ruban voilé constitutif du matériau intermédiaire selon l'invention est constitué d'une nappe unidirectionnelle de fibres de carbone présentant une masse surfacique de 100 à 280 g/m$^2$, associée, sur chacune de ses faces, à un non-tissé de fibres thermoplastiques, lesdits non-tissés présentant, chacun, une épaisseur de 0,5 à 50 microns, de préférence de 3 à 35 microns. Selon un mode de réalisation particulier, chaque ruban voilé présente une épaisseur de 80 à 380 microns, de préférence de 90 à 320 microns, et préférentiellement de 93 à 305 microns.

La norme NF EN ISO 9073-2 ne permet pas de mesurer l'un des constituants d'un matériau combiné de plusieurs éléments. Les méthodes suivantes peuvent être utilisées : l'une pour mesurer l'épaisseur d'un non-tissé au sein d'un ruban et l'autre pour mesurer l'épaisseur totale du ruban.

Ainsi, au sein d'un ruban, l'épaisseur du non tissé ou voile fixé sur la nappe unidirectionnelle de fils ou filaments de renfort peut être déterminée à partir de coupes microscopiques qui permettent une précision de +/- 1 μm. La méthode est la suivante : Un ruban voilé associant une nappe unidirectionnelle constituée de fils ou filaments de renfort et deux voiles contrecollés de chaque côté de la nappe est imprégné à l'aide d'un pinceau d'une résine qui polymérise à la température ambiante (Araldite et Araldur 5052 de la société Huntsman). L'ensemble est fixé entre deux plaques pour appliquer une pression de l'ordre de 2-5 kPa lors de la polymérisation. La mesure de l'épaisseur du voile présent dans le ruban voilé est indépendante de la pression exercée lors de cette étape. Une tranche de l'ensemble est enrobée dans une résine de prise à froid Epofix Kit de Struers, puis polie (à l'aide d'un papier abrasif à base de carbure de silicium d'un grain 320 µm et de différents feutres jusqu'à un grain de 0,3 µm) pour pouvoir être observée à l'aide d'un microscope optique Olympus BX 60 couplé à une caméra Olympus ColorView IIIu. La mise en oeuvre de cette résine qui polymérise à l'ambiante n'a aucune influence sur l'épaisseur du voile mais permet uniquement d'effectuer les mesures. Le logiciel analySIS auto 5.0 de la société Olympus Soft Imaging Solution GmbH permet de prendre des photos et de réaliser les mesures d'épaisseur. Pour chaque ruban voilé (nappe unidirectionnelle combinée à des voiles de chaque côté), 5 images sont prises avec un grossissement de 20. Sur chaque image, 15 mesures d'épaisseur du voile sont réalisées et la moyenne et l'écart-type de ces mesures sont déterminés.

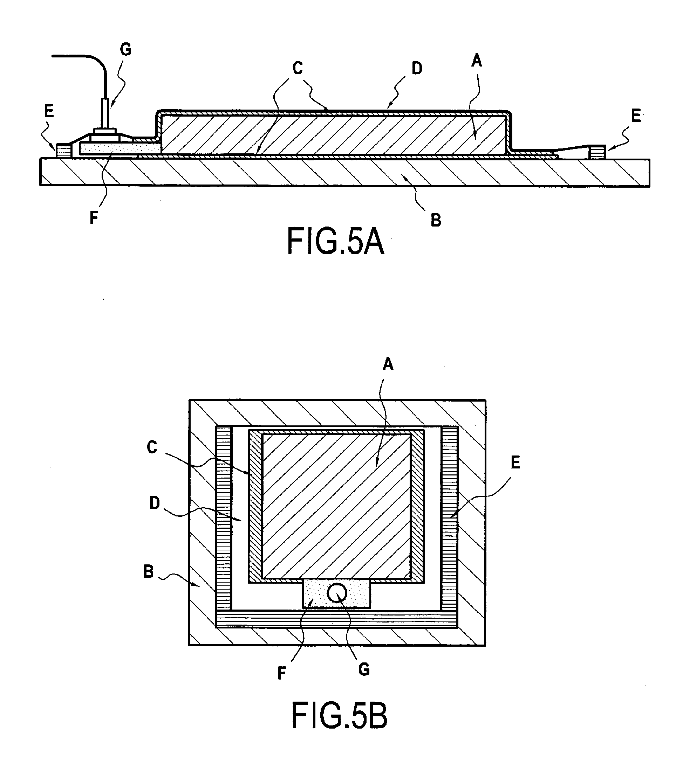

L'épaisseur totale d'un ruban voilé peut être déterminée à partir de la méthode suivante, dont le dispositif est schématisé sur les **Figures 5A et 5B,** qui détermine une moyenne sur une préforme constituée d'un empilement de rubans voilés. Sur ces Figures, **A** désigne la préforme ; **B** la plaque de support ; **C** le papier siliconé; **D** le film de mise sous vide ; **E** le joint de mise sous vide ; **F** le feutre de drainage et **G** la prise de vide. Cette méthode est classiquement utilisée par l'homme du métier et permet une mesure globale en minimisant la variabilité qui peut exister localement au sein d'un même ruban. Une préforme constituée d'un empilement de différentes couches orientées de ruban voilé est placée entre deux couches de papiers siliconés de 130 g/m$^2$ et d'une épaisseur de 0,15 mm commercialisé par la société SOPAL dans un film de mise sous vide CAPRAN 518 de la société Aerovac (Aerovac Systèmes France, Umeco Composites, 1 rue de la Sausse 31240 Saint-Jean, France) et en contact avec un feutre de drainage Airbleed 10HA commercialisé par Aerovac. L'étanchéité de l'ensemble est assurée à l'aide d'un joint de mise sous vide SM5130 commercialisé par Aerovac. Un vide compris entre 0,1 et 0,2 kPa est tiré à l'aide d'une pompe à vide Leybold SV40 B (Leybold Vacuum, Bourg les Valence, France). Ensuite, l'épaisseur de la préforme est mesurée entre deux comparateurs digitaux TESA Digico 10 après soustraction de l'épaisseur de la bâche à vide et des papiers siliconés. 25 mesures sont réalisées par préforme et la moyenne et l'écart type de ces mesures sont déterminés. L'épaisseur obtenue du ruban voilé est alors déterminée en divisant l'épaisseur de la préforme totale par le nombre de couches de rubans voilés superposés.

De façon avantageuse, l'épaisseur de chaque ruban voilé présent au sein du produit intermédiaire selon l'invention présente une faible variabilité, notamment avec des variations d'épaisseurs n'excédant pas 20 µm en écart-type, de préférence n'excédant pas 10 µm en écart-type. Cette caractéristique permet d'améliorer la régularité des pièces composites qui peuvent être obtenues.

Le grammage de la nappe de fibres de carbone peut être déterminé à partir du grammage de chaque ruban voilé (nappe unidirectionnelle + 2 voiles). Si l'on connait la masse surfacique des voiles, il est alors possible de déduire la masse surfacique de la nappe unidirectionnelle. De façon avantageuse, la masse surfacique est déterminée à partir du produit intermédiaire par attaque chimique (éventuellement également par pyrolyse) du voile. Ce type de méthode est classiquement utilisé par l'homme du métier pour déterminer le taux de fibres de carbone d'un tissu ou d'une structure composite.

On décrit ci-après une méthode de mesure du grammage d'un ruban. Le grammage d'un ruban est mesuré par pesée d'échantillons découpés de 100 cm$^2$ (c'est-à-dire de 113 mm de diamètre). Pour faciliter la découpe des échantillons d'un ruban qui est souple, le ruban est placé entre deux cartons lustrés de la société Cartonnage Roset (Saint Julien en Genevois, France) de 447 g/m$^2$ et de 0,450 mm d'épaisseur pour assurer une certaine rigidité de l'ensemble. Un emporte pièce circulaire pneumatique de la société Novi Profibre (Eybens, France) est utilisé pour découper l'ensemble ; 10 échantillons sont prélevés par type de ruban.

Par ailleurs, de façon avantageuse, la masse surfacique du voile présent au sein de chaque ruban voilé est comprise dans la gamme allant de 0,2 à 20 g/m$^2$.

Dans chaque ruban, l'association entre la nappe unidirectionnelle et les voiles peut être réalisée de manière discontinue, par exemple uniquement en certains points ou zones, mais est, de préférence, réalisée selon une liaison qui s'étend sur la totalité de la surface de la nappe, qualifiée de continue. L'association de la nappe unidirectionnelle aux deux voiles peut se faire par l'intermédiaire d'une couche adhésive, par exemple choisie parmi les adhésifs époxydes, adhésifs polyuréthane, les colles thermodurcissables, les adhésifs à base de monomère polymérisables, les adhésifs acryliques structuraux ou acryliques modifiés, les adhésifs hot-melt. Mais, le plus souvent l'association est réalisée grâce au caractère collant que présentent les voiles à chaud, par exemple lors d'une étape de thermocompression lors de leur conception qui permet d'assurer une liaison entre la nappe unidirectionnelle et les voiles. De manière préférée, la cohésion de chaque ruban voilé est assurée exclusivement par les non-tissés thermoplastiques.

Selon un mode de réalisation particulier, chaque ruban voilé présente une largeur donnée sensiblement constante sur toute sa longueur, c'est-à-dire que les rubans voilés possèdent une très faible variabilité de largeur sur toute leur longueur. Dans ce cas, du fait de la largeur sensiblement constante des rubans voilés utilisés, les rubans voilés selon l'invention présentent également une très faible variabilité en termes de masse surfacique. En particulier, la largeur de chaque ruban voilé présente, sur toute la longueur dudit ruban, un écart type notamment inférieur à 0,25 mm, de préférence inférieur à 0,22 mm et préférentiellement inférieur ou égal à 0,20 mm. Une faible variabilité de largeur permet notamment de réaliser par la suite des pièces d'une grande régularité, avec des propriétés mécanique contrôlées. La largeur des rubans voilés et l'écart type peuvent être déterminés selon la méthode décrite dans les exemples pour les résultats du **TABLEAU 3.** L'écart type peut être défini comme la moyenne quadratique des écarts à la moyenne, soit:

$$\sqrt{\frac{1}{n}\sum_i (x_i - \bar{x})^2} \qquad (1)$$

avec:

n = nombre de valeurs
xi = une valeur
$\bar{x}$ = moyenne arithmétique

Un tel ruban voilé de largeur sensiblement constante peut être obtenu selon un procédé qui comprend les étapes suivantes :

A1) ajustement de la largeur du ruban à la largeur souhaitée grâce à des moyens de calibrage,
A2) association du ruban sur chacune de ses faces à un non-tissé de fibres thermoplastiques permettant d'assurer une cohésion homogène du ruban, de manière à ce que la masse totale des non-tissés n'excède pas 25 % de la masse totale du ruban obtenu.

La constitution du ruban voilé peut être réalisée à partir de un ou plusieurs fils. Dans le cas où un ruban est constitué de plusieurs fils, c'est l'ensemble des fils (et non chaque fil pris individuellement) qui est calibré pour conduire à une nappe de largeur donnée.

Le procédé de constitution de tels rubans voilés qui ne sont pas actuellement disponibles dans le commerce est détaillé ci-après. Le ou les fils peuvent être tirés d'une bobine et peuvent subir un étalement, avant l'étape de calibration. Pour cela, le ou les fils pourront passer sur un dispositif d'étalement, par exemple constitués de un ou plusieurs barreaux étaleurs. Cette étape d'étalement pourra être nécessaire, en fonction du grammage souhaité et également, pour obtenir, avant calibration une largeur pour la nappe ou pour les fils supérieure à la largeur souhaitée après calibration. Ce système de calibration pourra être complété par une barre vibrante dans le sens de sa longueur, située en sortie des barreaux étaleurs, juste en amont des moyens de calibrage. De même, un tel dispositif pourra être complété par plusieurs barres vibrantes dans le cas où l'association de fils de titre important est utilisée pour des masses surfaciques très faibles.

L'étape de calibrage est réalisée en faisant passer la nappe ou le fil sur des moyens de calibrage, il peut s'agir d'un passage de largeur donné, notamment sous la forme d'une gorge à fond plat, aménagé sur un rouleau ou d'un passage aménagé entre deux dents, dans le cas où un ruban unique à base de un ou plusieurs fils est réalisé ou d'un peigne calibreur délimitant des passages calibrés pour plusieurs fils, dans le cas où plusieurs rubans voilés sont fabriqués en parallèle. Lorsque l'on réalise une nappe constituée de plusieurs fils, en réalité, la calibration, à proprement parlé, de la largeur de la nappe ne se fait que sur les deux fils extérieurs, les autres fils étant guidés par un peigne se situant en amont de l'élément d'étalement, de telle sorte qu'il n'y ait pas d'espace libre entre les fils à l'intérieur de la nappe.

En sortie des moyens de calibrage, la nappe unidirectionnelle calibrée présentera sur toute sa longueur, une largeur quasi-constante qu'elle va garder, jusqu'à l'obtention du ruban voilé final. De préférence, en sortie des moyens de calibrage, la largeur de la nappe unidirectionnelle calibrée présentera, sur toute la longueur de la nappe unidirectionnelle, un écart type notamment inférieur à 0,25 mm, de préférence inférieur à 0,24 mm et préférentiellement inférieur ou égal à 0,20 mm.

Dans un tel procédé, les non-tissés sont avantageusement associés au ruban, après ajustement de la largeur du ruban, de manière à maintenir la largeur obtenue après ajustement. Il est ainsi possible de calibrer le ruban à la largeur souhaitée, qui est sensiblement constante sur toute sa longueur, et figer la calibration obtenue en associant le ruban de fibres aux non-tissés par collage, et minimiser ainsi les variations de largeur. La nappe unidirectionnelle calibrée obtenue est ensuite associée, sur chacune de ses faces, à un non-tissé thermoplastique, par exemple sur un tapis convoyeur entraîné par des rouleaux. La distance entre la sortie des moyens de calibration et les moyens d'association de la nappe aux non-tissés sera, de préférence, très faible, de l'ordre de quelques millimètres, afin de conserver la calibration obtenue. Pour permettre leur liaison avec les fils ou filaments, après refroidissement, les non-tissés sont soumis, en amont de leur association au ruban, à une étape de chauffage entrainant le ramollissement, voire la fusion du polymère. Les conditions de chauffage et de pression, sont adaptées au matériau constitutif des non-tissés et à leur épaisseur. Le plus souvent une étape de thermocompression à une température comprise dans la gamme allant de $T_f$ non tissé - 15°C et $T_f$ non-tissé + 60°C (avec $T_{f\text{ non-tissé}}$ qui désigne la température de fusion du non-tissé) et sous une pression de 0,1 à 0,6 MPa est réalisée. Il est, ainsi, possible d'atteindre des taux de compression du non-tissé avant et après association allant de 1 à 10. L'étape de contrecollage des non-tissés sur l'unidirectionnel de fibres de renfort est également déterminante pour maîtriser correctement l'épaisseur finale du ruban. En effet, en fonction des conditions de température et de pression, notamment lors du contrecollage, il est possible de modifier, et donc d'ajuster, l'épaisseur du non-tissé présent de chaque côté dans le ruban.

L'épaisseur des non-tissés avant leur association à la nappe unidirectionnelle est choisie, en fonction de la façon dont ils vont être associés à la nappe de fibres unidirectionnelles. Le plus souvent, leur épaisseur est très proche de l'épaisseur souhaitée sur le ruban. Il peut également être possible de choisir d'utiliser un non-tissé d'épaisseur plus importante qui est alors laminé sous température lors de l'étape d'association, de manière à atteindre l'épaisseur voulue. De façon préférée, la nappe de fibres unidirectionnelles est associée sur chacune de ses grandes faces à deux non-tissés sensiblement identiques, de façon à obtenir un produit intermédiaire parfaitement symétrique.

Selon un mode de réalisation particulier, pouvant être combiné aux précédents, chaque ruban voilé ne présente pas de fibres coupées sur ses bords longitudinaux. Ceci rend l'utilisation de ces derniers beaucoup plus facile dans les procédés de tressage et tissage. En effet, la présence de fibres ou filaments coupés en bord de ruban a pour inconvénient de créer des zones d'accumulation des fibres ou filaments à certains points le long du trajet du ruban dans les procédés cités, et de causer des arrêts machine pour cause de casse de fils ou de mauvaise qualité du renfort créé. Ces bords avec présence de filaments coupés sont également générateur de fils s'enroulant sur eux même lors du dévidage de la bobine où se trouve enroulé le ruban, ce qui a pour conséquence également des casses de fils ou défaut de qualité (on parle alors de « bagues » créées sur la bobine de ruban). Une telle caractéristique est rendue possible, notamment grâce au procédé précédemment décrit qui évite tout découpage pour obtenir la largeur souhaitée au ruban.

Aussi, selon un mode de réalisation particulier, pouvant être combiné aux précédents, chaque ruban voilé présente, en certains points seulement de ses bords longitudinaux ou sur toute la longueur de ses deux bords longitudinaux, une liaison directe entre les deux non-tissés, réalisée grâce au caractère thermoplastique de ces derniers.

Dans le cadre de cette dernière variante de réalisation, de manière à encore favoriser l'obtention d'un bord net et une bonne maitrise de la largeur du ruban, dans le procédé précédemment détaillé, le ruban, d'une part, et les parties découpées de part et d'autre de ses bords, d'autre part, sont entrainés par des moyens d'extraction, tels que des moyens d'entrainement ou d'aspiration.

Dans ce cas, la largeur des non-tissés est choisie de manière à ce que ces derniers dépassent de part et d'autre de la nappe unidirectionnelle. Ensuite, le ruban est tiré du tapis convoyeur au moyen de rouleau d'entrainement (trio d'appel) et est soumis à une découpe au niveau de chacun de ses bords longitudinaux, au moyen d'un dispositif de découpe chauffant, et en particulier de couteaux chauffants. La découpe n'est pas réalisée dans un fil, mais juste à côté du bord du fil, afin d'éviter toute effilochure. Le découpage à chaud du non-tissé au niveau de chaque bord du ruban, entraine une certaine rétractation de ce dernier. Les deux non-tissés présentant une largeur supérieure à la largeur de la nappe unidirectionnelle, on observe un collage ponctuel des deux non tissés entre eux qui viennent préférentiellement emprisonner la nappe unidirectionnelle au niveau des bords de carbone. Le ruban voilé obtenu présente alors un bord bien net **4,** sans fragments de filaments coupés, comme illustré **Figure 6.**

Le ruban est alors tracté par un trio de rouleaux d'appel. Il est également possible pour favoriser, encore, l'obtention d'un bord bien net de procéder à l'extraction des chutes de non-tissé, par des moyens d'entrainement de type rouleaux d'entrainement ou par des moyens d'aspiration. Dans ce cas, les parties extrêmes correspondant aux déchets comportent un fil dont le non-tissé peut n'être découpé que d'un seul côté, ce qui va permettre de favoriser l'entrainement ou l'aspiration des déchets. Il peut également être prévu de disposer sur les bords destinés à être découpés et jouer le rôle de déchets, un fil de nature différente de ceux servant à la constitution des rubans voilés.

Les matériaux intermédiaires selon l'invention peuvent être utilisés pour la réalisation de pièces aéronautiques qui demandent de hautes performances mécaniques, et notamment pour la réalisation de pièces de structure primaire. En particulier, les tresses de forme cylindrique conformes à l'invention peuvent être utilisées pour la fabrication de pièces longilignes, telles que des cadres de fuselages ou des raidisseurs. Dans ce cas, par exemple, la tresse est déformée et maintenue en forme par couture ou préformage (thermocompression) pour présenter une section en forme de I, T, S notamment, comme illustré **Figure 7.**

De telles pièces pourrons être réalisées par tout procédé direct connu, tels que les procédés par infusion ou injection de résine thermodurcissable. La matrice utilisée est de type thermodurcissable. La résine injectée sera, par exemple, choisie parmi les polymères thermodurcissables suivants : les époxydes, les polyesters insaturés, les vinylesters, les phénoliques, les polyimides, les bismaléimides. La pièce composite est obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous vide et plus forte dans le cas de l'injection dans un moule RTM.

Le matériau intermédiaire et le procédé selon l'invention permettent, dans certains cas, de réaliser des pièces composites présentant un TVF de l'ordre de 60%, qui correspond au taux standard pour les structures primaires en aéronautique (c'est-à-dire les pièces vitales pour l'appareil) et, également, d'améliorer fortement la résistance à l'impact à faible vitesse des pièces composites obtenues: par exemple, la chute d'un outil dans un atelier lors de la fabrication d'une structure composite, un choc avec un corps étranger lors de son utilisation en fonctionnement.

La pression appliquée lors d'un procédé par injection est supérieure à celle utilisée lors d'un procédé par infusion. Il en résulte qu'il est plus facile de réaliser des pièces avec un TVF correct avec un procédé d'injection que d'infusion. Les matériaux selon l'invention permettent d'atteindre le taux volumique de fibres souhaité, et notamment de l'ordre de 53 à 60%, même lorsque la pièce composite est réalisée avec une étape c) telle que mentionnée précédemment, qui met en oeuvre une infusion et non une injection de résine. Un tel mode de réalisation constitue d'ailleurs une variante avantageuse.

Les pièces composites susceptibles d'être obtenues selon le procédé de l'invention font également parties intégrantes de l'invention, en particulier, les pièces qui présentent un taux volumique de fibres de 50 à 63% et notamment de 53 à 60%.

Les exemples ci-après permettent d'illustrer l'invention, mais n'ont aucun caractère limitatif.

## PARTIE A : CONSTITUTION DES RUBANS

Les fils de carbone T700GC 31E de 12 K sont commercialisés par la société Toray Industries, Japon.

Un non-tissé en polyamides de 4 (vendu sous la références 128D04 par Protechnic, France et nommé voile **a** a été utilisé. Les caractéristiques du voile **a** utilisé pour la fabrication des rubans voilés conformes à l'invention sont indiquées dans le **TABLEAU 1**. Le point de fusion du voile indiqué dans le **TABLEAU 1** est déterminé par calorimétrie différentielle à balayage (DSC) selon la norme ISO 11357-3. La masse surfacique est mesurée suivant la norme ISO 3801. Le taux de porosité indiqué dans le **TABLEAU 1** est calculé à partir de la formule suivante :

$$\text{Taux de porosité}_{\text{voile}}\ (\%) = 1 - \frac{\text{Masse surfacique du voile}}{\rho_{\text{matière du voile}} \times e_{\text{voile}}} \times 100 \qquad \textbf{(2)}$$

Où

- la masse surfacique du voile est exprimée en $kg/m^2$,
- $\rho_{\text{matière du voile}}$ est exprimée en $kg/m^3$,
- $e_{\text{voile}}$ est exprimée en m.

**TABLEAU 1 :** Caractéristiques du voile utilisé (les valeurs mentionnées après ± représentent l'écart type)

| Référence | Voile **a** |
|---|---|
| Point de fusion du voile (°C) | 178 |
| Masse surfacique ($g/m^2$) | 4±0,1 |
| Diamètre des filaments ($\mu$m) * | 13±3 |
| Epaisseur du voile ($\mu$m) | 69±12 |
| Taux de porosité (%) calculé à partir de la formule (2) | 97 |
| * Mesurées par analyse d'images | |

Les fils de carbone sont utilisés pour constituer des rubans en association avec deux voiles **a,** à l'aide d'une machine telle que représentée **FIGURE 8.** La référence des éléments chauffants de découpe est : Thermocut TC-1 de la société LOEPFE BROTHER, LIMITED, Wetzikon, Suisse.

Le ou les fils de carbone **1** sont déroulés à partir de bobines de carbone **100** fixées sur un cantre **101,** passent au travers d'un peigne **102,** sont conduits dans l'axe de la machine à l'aide d'un rouleau de guidage **103.** Les fils de carbone 12K et 800Tex initialement d'une largeur de variant de 4,5 à 7 mm environ sont alors étalés grâce à la barre chauffante **11** et à la barre d'étalement **12** puis calibré à une largeur de 5,42 mm grâce aux moyen de calibrage pour avoir une nappe unidirectionnelle à la largeur souhaitée. Les rouleaux de non-tissés **104a** et **104b** sont déroulés sans tension et transportés à l'aide de tapis continus **105a** et **105b** fixés entre les rouleaux libres en rotation **106a, 106b, 106c, 106d** et les barres chauffées **107a, 107b.** Les non-tissés **2a** et **2b** sont préchauffés dans les zones **108a** et **108b** avant d'être en contact avec les fils de carbones **1** et contrecollés de part et d'autre de deux barres chauffées **107a** et **107b** dont l'entrefer est contrôlé. Une calandre **108,** qui peut être refroidie, applique ensuite une pression sur la nappe unidirectionnelle avec un non-tissé de chaque côté, qui est ensuite dirigée vers les moyens de découpe **109.** Un rouleau de renvoi **110** permet de rediriger le ruban **I** vers le système de traction comprenant un trio d'appel **111** puis d'enroulage **112** pour former un rouleau constitué du ruban voilé **I.**

Les conditions opératoires sont indiquées dans le **TABLEAU 2.**

**TABLEAU 2**

| Non-tissé | Fibre | Masse surfacique de carbone (g/m$^2$) | Largeur (mm) | Vitesse ligne (m/min) | T° Barre 11 (°C) | T° Barre 13 (°C) | T° 108a & 108b (°C) | T° 107a & 107b (°C) |
|---|---|---|---|---|---|---|---|---|
| voile **a** | T700 GC | 147 | 5,42 | 1,3 | 220 | 220 | 140 | 140 |

Les caractéristiques des rubans obtenus sont présentées **TABLEAU 3.**

Les mesures de largeur moyenne et d'écart type ont été réalisées grâce au dispositif suivant : le ruban voilé est déroulé de son support à la vitesse constante de 1,2m par minute, avec une tension constante comprise entre 200 et 400cN, où il passe ensuite, à une distance de 265mm et sans support à cet endroit, devant une caméra modèle Baumer Optronic Type FWX 20, focale 20mm, 1624x1236 pixels (Baumer Optronic Gmbh, Allemagne). La calibration de la caméra est la suivante : 1 pixel équivaut à 0.05mm, ce qui correspond à une taille de photo de 1640 pixels x 0,05=82mm. Une photo est ensuite prise tous les 38mm, sur une longueur minimum de 50m correspondant à 1315 mesures de largeur minimum.

Le logiciel NEUROCHECK 5.1 (Neurocheck Gmbh, Allemagne) analyse ensuite l'image et stocke les valeurs de largeurs dans un ficher qui sera ensuite traité statistiquement par le logiciel MINITAB (Minitab Inc, USA).

**TABLEAU 3**

| | | Largeur moyenne (mm) | Ecart-type (mm) |
|---|---|---|---|
| **T700GC 12K** | **147g/m$^2$** | **5,42** | **0,13** |

**PARTIE B : CONSTITUTION DES MATERIAUX INTERMEDIAIRES**

Dans tous les exemples ci-après, un tissage armure sergé 2/2 tel que celui représenté **Figure 9** est utilisé pour fabriquer des matériaux intermédiaires selon l'invention, à l'aide des rubans tels que précédemment décrits. 1,85 rubans (ce qui correspond au nombre de fils étant donné qu'un ruban est composé d'un seul fil dans le cas exemplifié) par cm sont utilisés en chaine et en trame. Ce même tissage est utilisé dans les exemples comparatifs.

**Exemple 1**

Les rubans obtenus avec le voile **a** et calibrés à 5,42mm sont utilisés en chaine et en trame. Le tissage est réalisé sur métier à tisser Dornier (Lindau, Allemagne) modèle PTS conformément à la méthode nommée « tissage à la déroulée SD » dans le brevet EP 0670921, c'est-à-dire sans étalement post-tissage, à une vitesse de 100 duites/min. L'armure tissé est un sergé 2/2, le duitage est à 1,85 fils/cm, afin d'obtenir un tissu équilibré de 295 g/m$^2$.

**Exemple comparatif 1**

Des fils de carbone T700GC 31E de 12 K non voilés sont utilisés en chaine et en trame. Le tissage est réalisé sur métier à tisser Domier (Lindau, Allemagne) modèle PTS conformément à la méthode nommée « tissage à la déroulée SD» dans le brevet EP 0670921, c'est-à-dire sans étalement post-tissage, à une vitesse de 100 duites/min. L'armure tissé est un sergé 2/2, le duitage est à 1,85 fils/cm afin d'obtenir un tissu équilibré de 295g/m$^2$ (référence 48302 d'Hexcel Reinforcements).

## Exemple comparatif 2

Des fils de carbone T700GC 31E de 12 K non voilés sont utilisés en chaine et en trame. Le tissage est réalisé sur métier à tisser Domier (Lindau, Allemagne) modèle PTS conformément à la méthode nommée « tissage à la déroulée SD » dans le brevet EP 0670921, c'est-à-dire sans étalement post-tissage, à une vitesse de 100 duites/min. L'armure tissé est un sergé 2/2, le duitage est à 1,85 fils/cm afin d'obtenir un tissu équilibré de 295g/m$^2$ (référence 48302 d'Hexcel Reinforcements).

Après le tissage, le tissu obtenu est associé sur chacune de ses faces au voile **a** précédemment décrit conformément aux conditions données **TABLEAUX 4** et **5.** Une ligne de laminage à plat (ou « ligne de contrecollage » de la société S-Line (Brugg, Switzerland) avec les paramètres suivants :

### TABLEAU 4

| | |
|---|---|
| Vitesse de ligne (m/min) | 3 |
| Temps de séjour (s) | 44 |
| Entrefer (mm) | 0,3 |
| Entrefer due à la surpression (mm) | 0 |
| Pression de calendrage (N/cm$^2$) | 36 |

### TABLEAU 5

| T(°C) | Zone basse | | | Zone haute | | |
|---|---|---|---|---|---|---|
| | Gauche | Milieu | Droit | Gauche | Milieu | Droit |
| Zone 1 | 135 | 163 | 135 | 135 | 163 | 135 |
| Zone 2 | 178 | 178 | 145 | 150 | 178 | 145 |
| Zone 3 | 190 | 190 | 190 | 190 | 190 | 190 |

## Mesures de perméabilité

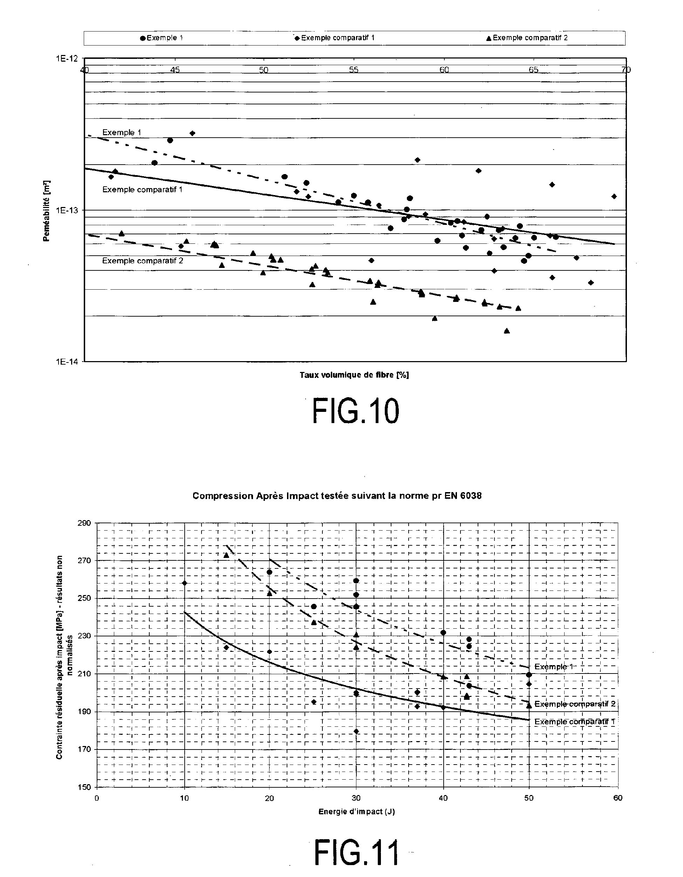

La perméabilité transverse peut se définir par l'aptitude qu'a un fluide à traverser un matériau fibreux. Elle se mesure en m$^2$. Les valeurs données ci-dessus, ainsi que celles mentionnées dans les exemples qui suivent, sont mesurées avec l'appareillage et la technique de mesure décrite dans la Thèse intitulée « Problématique de la mesure de la perméabilité transverse de préformes fibreuses pour la fabrication de structures composites », par Romain Nunez, soutenue à l'Ecole Nationale Supérieure des Mines de Saint Etienne, le 16 Octobre 2009, à laquelle on pourra se référer pour plus de détails. La mesure est notamment réalisée avec un contrôle de l'épaisseur de l'échantillon pendant l'essai en utilisant deux chambres co-cylindriques permettant de réduire l'influence du « race-tracking » (passage du fluide à coté ou « sur le coté » du matériau dont la perméabilité est à mesurer). Le fluide utilisé est de l'eau et la pression est de 1 bar +/-0,01bar. Les mesures de perméabilités obtenues avec les matériaux de l'exemple 1 et des exemples comparatifs 1 et 2 sont présentées **Figure 10.**

## Mesures de facteur d'ouverture

Les facteurs d'ouverture ont été mesurés selon la méthode suivante.

Le dispositif est constitué d'une caméra de marque SONY (modèle SSC-DC58AP), équipée d'un objectif de 10x, et d'une table lumineuse de marque Waldmann, modèle W LP3 NR,101381 230V 50HZ 2x15W. L'échantillon à mesurer est posé sur la tale lumineuse, la caméra est fixée sur une potence, et positionnée à 29cm de l'échantillon, puis la netteté est réglée.

La largeur de mesure est déterminée en fonction du matériau fibreux à analyser, à l'aide de la bague (zoom), et d'une règle : 10cm pour les matériaux fibreux ouverts (OF>2%), 1,17cm pour les matériaux fibreux peu ouverts (OF<2%).

A l'aide du diaphragme et d'un cliché témoin, la luminosité est réglée pour obtenir une valeur d'OF correspondant à celle donnée sur le cliché témoin.

Le logiciel de mesure par contraste Videomet, de la société Scion Image (Scion Corporation, USA), est utilisé. Après capture de l'image, celle-ci est traitée de la façon suivante : A l'aide d'un outil, on définit une surface maximum correspondant à l'étalonnage choisi, par exemple pour 10cm - 70 trous, et comportant un nombre de motifs entier. On sélectionne alors une surface élémentaire au sens textile du terme, c'est-à-dire une surface qui décrit la géométrie du matériau fibreux par répétition.

La lumière de la table lumineuse passant au travers des ouvertures de du matériau fibreux, l'OF en pourcentage est défini par cent auquel est soustrait la surface noire divisée par la surface élémentaire soit 100-(surface noire / surface élémentaire ).

Il est à noter que le réglage de la luminosité est important car des phénomènes de diffusion peuvent modifier la taille apparente des trous et donc de l'OF. Une luminosité intermédiaire sera retenue, de telle sorte qu'aucun phénomène de saturation ou de diffusion trop importante ne soit visible.

Les résultats obtenus sont présentés dans le **TABLEAU 6** ci-après :

**TABLEAU 6**

| OF (%) | Moyenne | Ecart-Type |
|---|---|---|
| Exemple 1 | 0,22 | 0,12 |
| Exemple comparatif 1 | 0,05 | 0,04 |
| Exemple comparatif 2 | 0,05 | 0,04 |

On peut noter que les valeurs sont très basses pour les trois renforts décrits, des tissus avec des facteurs d'ouverture inférieurs à 0,5% sont dits « fermés ».

PARTIE C : REALISATION DE PIECES COMPOSITES

Des plaques composites sont réalisées à partir d'un ensemble de matériaux intermédiaires disposés dans avec les différentes orientations 0°, 45°, -45°, 90°. L'empilement est symétrique. Le nombre de matériaux intermédiaires (également nommés plis) constituant l'empilement est déterminé à partir de la formule suivante déduite de la formule (3):

$$n_{\text{plis}} = \frac{TVF(\%) \, \text{x} \rho_{\text{fibre carbone}} \, \text{x} \, e_{\text{plaque}}}{\text{Masse surfacique UD}_{\text{carbone}}} \, \text{x} \, 10 \qquad \textbf{(3)}$$

sachant que :

- l'épaisseur visée de la plaque est la plus proche de 4 mm (définie par la norme prEN 6038), e plaque est exprimée en mm (dans les exemples l'épaisseur visée est de 3,81mm),
- le taux volumique de fibres (TVF) visé pour obtenir les meilleures propriétés mécaniques, est de généralement 60% et $\rho$ fibre carbone est exprimée en g/cm$^3$,
- La masse surfacique de l'UD carbone est exprimée en g/m$^2$.

L'empilement est ainsi constitué de 12 plis dans le cas d'un grammage de carbone de 295 g/m$^2$ et s'écrit en notation abrégée : [(+45/- 45)/(0/90)]$_{3S}$.

**4.2 Fabrication de la plaque composite**

Les différents plis sont maintenus entre eux en soudant légèrement à chaque ajout de nouveau pli en quelques points à l'aide d'un fer à souder. L'ensemble constitue une préforme. La préforme de 340 mm x 340 mm, constituée de la séquence d'empilement adapté au grammage de carbone est placée dans un moule d'injection sous une presse. Un cadre d'épaisseur connu entoure la préforme afin d'obtenir le taux volumique de fibres (TVF) souhaité.

La résine époxy commercialisée sous la référence HexFlow RTM6 par Hexcel est injectée à 80°C sous 2 bars à travers la préforme qui est maintenue à 120°C, température des plateaux de la presse. La pression appliquée sur chacun des deux plateaux de la presse est de 5 bars. Lorsque que la résine apparaît au point de sortie du moule, le tuyau de sortie est fermé et le cycle de polymérisation commence (montée jusqu'à 180°C à 3°C/min, puis maintien 2 heures à 180°C, puis refroidissement à 5 °C/min). 6 éprouvettes par type de configuration de 150 x 100mm (norme prEN 6038) sont ensuite découpées pour réaliser le test de compression après impact (CAI).

## 5. Essais mécaniques

Les éprouvettes (12 par type de configuration) sont fixées sur un dispositif comme indiqué dans la norme prEN 6038. Les éprouvettes ont été soumises à plusieurs impacts à différentes énergies allant de 10 à 50 J à l'aide d'un équipement adapté à la norme européenne préliminaire prEN 6038 publiée par ASD-STAN (AeroSpace and Defence Standard, Avenue de Tervueren 270, 1150 Woluwe-Saint-Pierre, Belgique). Les essais de compression ont été réalisés sur une machine de tests mécaniques Zwick (Zwick France Sarl, Roissy Charles de Gaule, France).

Les résultats de contrainte à la rupture en compression après impact (CAI) de la plaque obtenue avec les matériaux intermédiaires de l'exemple 1 et des plaques obtenues avec les matériaux intermédiaires des exemples comparatifs 1 et 2 sont donnés **Figure 11.** Les performances CAI sont améliorées pour les pièces composites conformes à l'invention.

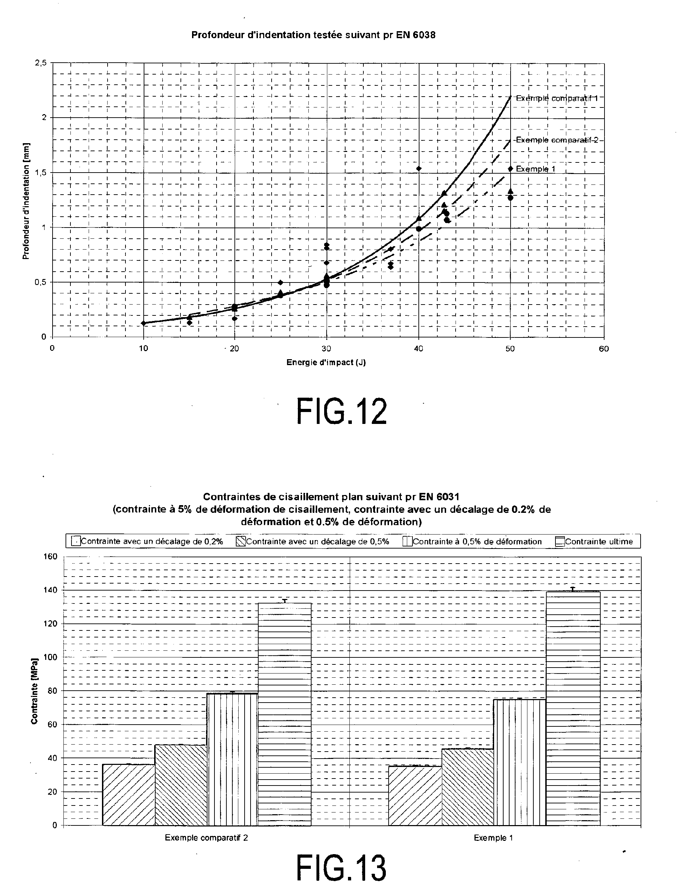

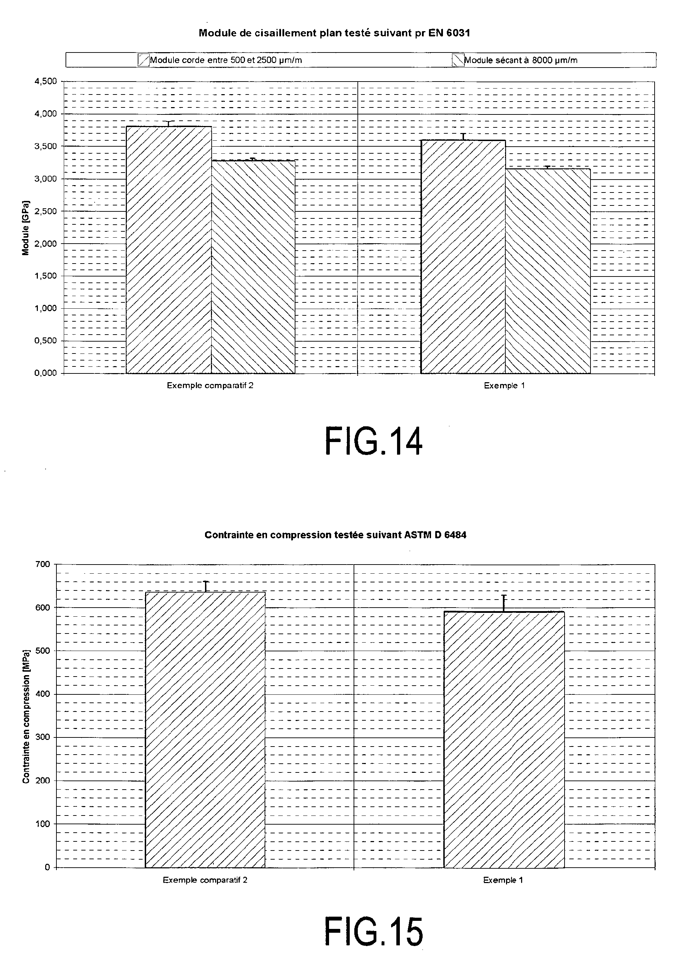

Les résultats des tests conformes à la norme pr EN6038 sont donnés **Figure 12.** Les **Figures 13, 14 et 15** comparent les résultats de contraintes à rupture en compression après impact de la plaque obtenue avec les matériaux intermédiaires de l'exemple 1 et de la plaque obtenue avec les matériaux intermédiaires de l'exemple comparatif 2, respectivement selon les tests de la norme pr EN 6031 **(Figure 13** et **14),** selon le test de la norme ASTM D 6484 **(Figure 15).** Dans ces tests, les performances mécaniques sont équivalentes.

## Revendications

1. Matériau intermédiaire composé d'un ensemble de rubans entrecroisés avec entrelacement **caractérisé en ce qu'**au moins certains des rubans, et de préférence tous les rubans, nommés rubans voilés, sont composés d'une série de fils ou filaments de renfort qui s'étendent selon une direction parallèle à la longueur du ruban pour former une nappe unidirectionnelle qui est associée sur chacune de ses faces à un non-tissé en fibres thermoplastiques, ces deux non-tissés assurant la cohésion dudit ruban voilé grâce à leur caractère thermoplastique.

2. Matériau intermédiaire selon la revendication 1 **caractérisé en ce que** chaque ruban voilé présente une largeur donnée sensiblement constante sur toute sa longueur.

3. Matériau intermédiaire, selon la revendication 1 ou 2, **caractérisé en ce que** la largeur de chaque ruban voilé présente, sur toute la longueur dudit ruban, un écart type notamment inférieur à 0,25 mm, de préférence inférieur à 0,22 mm et préférentiellement inférieur ou égal à 0,20 mm.

4. Matériau intermédiaire, selon l'une des revendications précédentes, **caractérisé en ce que** chaque ruban voilé présente, en certains points seulement de ses bords longitudinaux ou sur toute la longueur de ses deux bords longitudinaux, une liaison directe entre les deux non-tissés, réalisée grâce au caractère thermoplastique de ces derniers.

5. Matériau intermédiaire, selon l'une des revendications précédentes, **caractérisé en ce que** la masse de non-tissés, au sein de chaque ruban voilé, représente de 3 à 10 % de la masse totale de chaque ruban.

6. Matériau intermédiaire, selon l'une des revendications précédentes, **caractérisé en ce que** les fibres thermoplastiques, au sein de chaque ruban voilé, sont choisies parmi les fibres de Polyamides (PA : PA6, PA12, PA11, PA6,6, PA 6,10, PA 6,12, ...), Copolyamides (CoPA), Polyamides - block ether ou ester (PEBAX, PEBA), polyphtalamide (PPA), Polyesters (Polyéthylène téréphtalate -PET-, Polybutylène téréphtalate - PBT-...), Copolyesters (CoPE), polyuréthanes thermoplastiques (TPU), polyacétales (POM...), Polyoléfines (PP, HDPE, LDPE, LLDPE....), Polyéthersulfones (PES), polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), polyimides thermoplastiques, polymères à cristaux liquides (LCP), phenoxys, copolymères à blocs tels que les copolymères Styrène-Butadiene-Méthylméthacrylate(SBM), copolymères Méthylméthacrylate -Acrylate de Butyl-Méthylméthacrylate (MAM) ou un mélange de fibres constituées de ces matériaux thermoplastiques.

**7.** Matériau intermédiaire, selon l'une des revendications précédentes, **caractérisé en ce que** la cohésion de chaque ruban voilé est assurée exclusivement par les non-tissés thermoplastiques.

**8.** Matériau intermédiaire, selon l'une des revendications précédentes, **caractérisé en ce que** chaque ruban voilé est constitué d'une nappe unidirectionnelle de fibres de carbone présentant une masse surfacique de 100 à 280 g/m$^2$, associée, sur chacune de ses faces, à un non-tissé de fibres thermoplastiques, lesdits non-tissés présentant, chacun, une épaisseur de 0,5 à 50 microns, de préférence de 3 à 35 microns.

**9.** Matériau intermédiaire selon la revendication 8 **caractérisé en ce que** chaque ruban voilé présente une épaisseur de 80 à 380 microns, de préférence de 90 à 320 microns, et préférentiellement de 93 à 305 microns.

**10.** Matériau intermédiaire, selon l'une des revendications 8 ou 9, **caractérisé en ce que** l'épaisseur de chaque ruban voilé présente une faible variabilité, notamment avec des variations d'épaisseurs n'excédant pas 20 $\mu$m en écart-type, de préférence n'excédant pas 10 $\mu$m en écart-type.

**11.** Matériau intermédiaire, selon l'une des revendications 8 à 10, **caractérisé en ce que** les voiles, au sein de chaque ruban voilé, ont une masse surfacique comprise dans la gamme allant de 0,2 à 20 g/m$^2$.

**12.** Matériau intermédiaire, selon l'une des revendications précédentes, **caractérisé en ce qu'**il se présente sous la forme d'un tissu.

**13.** Matériau intermédiaire, selon l'une des revendications précédentes, **caractérisé en ce qu'**il se présente sous la forme d'une tresse, en particulier d'une tresse formant un cylindre.

**14.** Procédé de fabrication d'une pièce composite **caractérisé en ce qu'**il comporte les étapes suivantes :

a) disposer d'au moins un matériau selon l'une des revendications précédentes,
b) éventuellement empiler différents matériaux selon l'une des revendications précédentes et éventuellement les solidariser sous la forme d'une préforme,
c) ajouter, par infusion ou injection, une résine thermodurcissable,
d) consolider la pièce souhaitée par une étape de polymérisation/réticulation suivant un cycle défini en température et sous pression, suivi d'un refroidissement.

**15.** Procédé selon la revendication 14 **caractérisé en ce que** la résine thermodurcissable est ajoutée au(x) matériau (x) par infusion sous pression réduite, notamment sous une pression inférieure à la pression atmosphérique, notamment inférieure à 1 bar et de préférence comprise entre 0,1 et 1 bar.

**16.** Pièce composite susceptible d'être obtenue selon le procédé de la revendication 14 ou 15.

**17.** Pièce composite selon la revendication 16 **caractérisée en ce qu'**elle présente un taux volumique de fibres de 50 à 63%, de préférence de 53 à 60%.

**18.** Pièce composite selon la revendication 16 ou 17 **caractérisée en ce qu'**elle présente une valeur de contrainte à rupture de compression après impact (CAI), mesurée selon la norme prEN 6038 sous un impact d'énergie de 25 J, supérieure à 200 MPa.

**Patentansprüche**

**1.** Zwischenmaterial, das aus einer Anordnung von verschlungen gekreuzten Bändern besteht, **dadurch gekennzeichnet, dass** wenigstens einige der Bänder, und vorzugsweise alle Bänder, die als umhüllte Bänder bezeichnet werden, aus einer Reihe von Verstärkungsfäden oder -filamenten bestehen, die in einer zu der Länge des Bandes parallelen Richtung verlaufen, um eine unidirektionale Lage zu bilden, welche auf jeder ihrer Seiten einem Vlies aus thermoplastischen Fasern zugeordnet ist, wobei diese beiden Vliese dank ihres thermoplastischen Charakters den Zusammenhalt des umhüllten Bandes sicherstellen.

**2.** Zwischenmaterial nach Anspruch 1, **dadurch gekennzeichnet, dass** jedes umhüllte Band eine gegebene Breite, die über seine gesamte Länge im Wesentlichen konstant ist, aufweist.

3. Zwischenmaterial nach Anspruch 1 oder 2, **dadurch gekennzeichnet, dass** die Breite eines jeden umhüllten Bandes über die gesamte Länge des Bandes eine Standardabweichung insbesondere von weniger als 0,25 mm, vorzugsweise weniger als 0,22 mm und bevorzugt von weniger als oder gleich 0,20 mm aufweist.

4. Zwischenmaterial nach einem der vorhergehenden Ansprüche, **dadurch gekennzeichnet, dass** jedes umhüllte Band nur an einigen Stellen seiner Längsränder oder über die gesamte Länge seiner beiden Längsränder eine direkte Verbindung zwischen den beiden Vliesen, die dank des thermoplastischen Charakters letzterer hergestellt ist, aufweist.

5. Zwischenmaterial nach einem der vorhergehenden Ansprüche, **dadurch gekennzeichnet, dass** die Vlies masse innerhalb eines jeden umhüllten Bandes 3 bis 10 % der Gesamtmasse eines jeden Bandes ausmacht.

6. Zwischenmaterial nach einem der vorhergehenden Ansprüche, **dadurch gekennzeichnet, dass** die thermoplastischen Fasern innerhalb eines jeden umhüllten Bandes aus Fasern aus Polyamiden- (PA: PA6, PA12, PA11, PA 6,6, PA 6,10, PA 6,12, ....), Copolyamiden- (CoPA), Polyether- oder Polyester-Block-Amiden (PEBAX, PEBA), Polyphthalamid (PPA), Polyestern (Polyethylenterephthalat - PET -, Polybutylenterephthalat - PBT -), Copolyestern (CoPE), thermoplastischen Polyurethanen (TPU), Polyacetalen (POM...) Polyolefinen (PP, HDPE, LDPE, LLDPE...), Polyethersulfonen (PES), Polysulfonen (PSU...), Polyphenylsulfonen (PPSU...), Polyetheretherketonen (PEEK), Polyetherketonketon (PEKK), Polyphenylensulfid (PPS) oder Polyetherimiden (PEI), thermoplastischen Polyimiden, Flüssigkristallpolymeren (LCP), Phenoxys, Blockcopolymeren, wie Methylmethacrylat-Butadien-Styrol (MBS)-Copolymeren, Methylmethacrylat-Butylacrylat-Methylmethacrylat (MAM)-Copolymeren, oder einer Mischung von aus diesen thermoplastischen Materialien bestehenden Fasern ausgewählt sind.

7. Zwischenmaterial nach einem der vorhergehenden Ansprüche, **dadurch gekennzeichnet, dass** der Zusammenhalt eines jeden umhüllten Bandes ausschließlich durch die thermoplastischen Vliese sichergestellt wird.

8. Zwischenmaterial nach einem der vorhergehenden Ansprüche, **dadurch gekennzeichnet, dass** jedes umhüllte Band von einer unidirektionalen Lage aus Kohlenstofffasern mit einer flächenbezogenen Masse von 100 bis 280 g/m$^2$, die auf jeder ihrer Seiten einem Vlies aus thermoplastischen Fasern zugeordnet ist, gebildet ist, wobei die Vliese jeweils eine Dicke von 0,5 bis 50 Mikron, vorzugsweise von 3 bis 35 Mikron aufweisen.

9. Zwischen material nach Anspruch 8, **dadurch gekennzeichnet, dass** jedes umhüllte Band eine Dicke von 80 bis 380 Mikron, vorzugsweise von 90 bis 320 Mikron und bevorzugt von 93 bis 305 Mikron aufweist.

10. Zwischenmaterial nach einem der Ansprüche 8 oder 9, **dadurch gekennzeichnet, dass** die Dicke eines jeden umhüllten Bandes eine geringe Variabilität aufweist, insbesondere mit Dickenschwankungen, die 20 $\mu$m als Standardabweichung, vorzugsweise 10 $\mu$m als Standardabweichung nicht überschreiten.

11. Zwischenmaterial nach einem der Ansprüche 8 bis 10, **dadurch gekennzeichnet, dass** die Flore innerhalb eines jeden umhüllten Bandes eine flächenbezogene Masse im Bereich von 0,2 bis 20 g/m$^2$ aufweisen.

12. Zwischenmaterial nach einem der vorhergehenden Ansprüche, **dadurch gekennzeichnet, dass** es in Form eines Gewebes vorliegt.

13. Zwischenmaterial nach einem der vorhergehenden Ansprüche, **dadurch gekennzeichnet, dass** es in Form eines Geflechts, insbesondere eines einen Zylinder bildenden Geflechts vorliegt.

14. Verfahren zur Herstellung eines Verbundteils, **dadurch gekennzeichnet, dass** es die folgenden Schritte umfasst:

a) Bereithalten wenigstens eines Materials nach einem der vorhergehenden Ansprüche,
b) eventuell Aufschichten verschiedener Materialien nach einem der vorhergehenden Ansprüche und eventuell festes Verbinden derer in Form eines Vorformlings,
c) Zugeben eines Duroplasts durch Infusion oder Injektion,
d) Verfestigen des gewünschten Teils durch einen Polymerisations-/Vernetzungsschritt entsprechend einem Zyklus mit bestimmter Temperatur und unter Druck, an den sich ein Abkühlen anschließt.

15. Verfahren nach Anspruch 14, **dadurch gekennzeichnet, dass** der Duroplast dem (den) Material(ien) durch Infusion unter verringertem Druck, insbesondere unter einem Druck, der niedriger als der atmosphärische Druck ist, insbesondere weniger als 1 bar beträgt und vorzugsweise zwischen 0,1 und 1 bar liegt, zugegeben wird.

16. Verbundteil, das geeignet ist, nach dem Verfahren des Anspruches 14 oder 15 erhalten zu werden.

17. Verbundteil nach Anspruch 16, **dadurch gekennzeichnet, dass** es einen Volumenanteil an Fasern von 50 bis 63 %, vorzugsweise von 53 bis 60 % aufweist.

18. Verbundteil nach Anspruch 16 oder 17, **dadurch gekennzeichnet, dass** es einen Druckfestigkeitswert nach Einschlag (CAI), gemessen nach der prEN-Norm 6038 unter einem Einschlag mit einer Energie von 25 J, von über 200 MPa aufweist.


**Claims**

1. An intermediate material composed of a set of overlapping and interlaced tapes, **characterized in that** at least some of the tapes, preferably all of the tapes, known as veiled tapes, are composed of a series of reinforcing yarns or filaments that extend in a direction parallel to the length of the tape to form a unidirectional sheet that is associated on each of its faces with a nonwoven formed from thermoplastic fibers, said two nonwovens providing said veiled tape with cohesiveness because of their thermoplastic nature.

2. An intermediate material according to claim 1, **characterized in that** each veiled tape has a given, substantially constant width over its entire length.

3. An intermediate material according to claim 1 or claim 2, **characterized in that** the width of each veiled tape has, over the entire length of said tape, a standard deviation that is less than 0.25 mm, preferably less than 0.22 mm and preferentially 0.20 mm or less.

4. An intermediate material according to any preceding claim, **characterized in that** each veiled tape has, at only certain points of its longitudinal edges or over the entire length of its longitudinal edges, a direct connection between the two nonwovens produced because of the thermoplastic nature thereof.

5. An intermediate material according to any preceding claim, **characterized in that** the weight of the nonwovens in each veiled tape represents 3% to 10% of the total weight of each tape.

6. An intermediate material according to any preceding claim, **characterized in that** the thermoplastic fibers in each veiled tape are selected from fibers of polyamides (PA: PA6, PA12, PA11, PA6,6, PA 6,10, PA 6,12, etc.), copolyamides (CoPA), polyamides - block ether or ester (PEBAX, PEBA), polyphthalamide (PPA), polyesters (polyethylene terephthalate -PET-, polybutylene terephthalate - PBT- etc.), copolyesters (CoPE), thermoplastic polyurethanes (TPU), polyacetals (POM, etc.), polyolefins (PP, HDPE, LDPE, LLDPE etc.), polyethersulfones (PES), polysulfones (PSU etc.), polyphenylene sulfones (PPSU etc.), polyetheretherketones (PEEK), polyetherketoneketone (PEKK), poly(phenylene sulfide) (PPS), or polyetherimides (PEI), thermoplastic polyimides, liquid crystal polymers (LCP), phenoxys, block copolymers such as styrene-butadiene-methylmethacrylate copolymers (SBM), methylmethacrylatebutyl acrylate - methylmethacrylate copolymers (MAM), or a mixture of fibers made up of said thermoplastic materials.

7. An intermediate material according to any preceding claim, **characterized in that** the cohesiveness of each veiled tape is provided exclusively by the thermoplastic nonwovens.

8. An intermediate material according to any preceding claim, **characterized in that** each veiled tape is made up of a unidirectional sheet of carbon fibers with a weight per unit area of 100 $g/m^2$ to 280 $g/m^2$ associated on each of its faces with a nonwoven of plastic fibers, said nonwovens each having a thickness of 0.5 micrometers to 50 micrometers, preferably 3 to 35 micrometers.

9. An intermediate material according to claim 8, **characterized in that** each veiled tape has a thickness of 80 micrometers to 380 micrometers, preferably 90 micrometers to 320 micrometers, preferentially 93 micrometers to 305 micrometers.

10. An intermediate material according to claim 8 or claim 9, **characterized in that** the variability in the thickness of each veiled tape is low, especially with variations in thickness not exceeding a standard deviation of 20 $\mu$m, preferably not exceeding a standard deviation of 10 $\mu$m.

11. An intermediate material according to any one of claims 8 to 10, **characterized in that** the veils in each veiled tape have a weight per unit area in the range from 0.2 $\mu$g/m$^2$ to 20 g/m$^2$.

12. An intermediate material according to any preceding claim, **characterized in that** it is in the form of a fabric.

13. An intermediate material according to any preceding claim, **characterized in that** it is in the form of a braid, in particular a braid forming a cylinder.

14. A method of producing a composite part, **characterized in that** it comprises the following steps:

   a) providing at least one material according to any preceding claim;
   b) optionally, stacking various materials according to any preceding claim and optionally securing them into the form of a preform;
   c) adding a thermosetting resin by infusion or injection;
   d) consolidating the desired part by means of a polymerization/curing step following a pre-set temperature and pressure cycle followed by cooling.

15. A method according to claim 14, **characterized in that** the thermosetting resin is added to the material(s) by reduced pressure infusion, in particular at a pressure below atmospheric pressure, in particular less than 1 bar and preferably in the range 0.1 bar to 1 bar.

16. A composite part that can be obtained using the method according to claim 14 or claim 15.

17. A composite part according to claim 16, **characterized in that** it has a fiber volume fraction in the range 50% to 63%, preferably in the range 53% to 60%.

18. A composite part of claim 16 or claim 17, **characterized in that** it has a value for the compression after impact (CAI) breaking stress at an impact energy of 25 J, measured in accordance with standard prEN 6038, of more than 200 MPa.

**FIG.1**

**FIG.2**

**FIG.3**

FIG.4

FIG.9

FIG.5A

FIG.5B

FIG.6

FIG.7

FIG.8

21

**FIG.10**

Compression Après Impact testée suivant la norme pr EN 6038

**FIG.11**

Profondeur d'indentation testée suivant pr EN 6038

## FIG.12

Contraintes de cisaillement plan suivant pr EN 6031
(contrainte à 5% de déformation de cisaillement, contrainte avec un décalage de 0.2% de
déformation et 0.5% de déformation)

## FIG.13

EP 2 516 138 B1

**Module de cisaillement plan testé suivant pr EN 6031**

FIG.14

**Contrainte en compression testée suivant ASTM D 6484**

FIG.15

## RÉFÉRENCES CITÉES DANS LA DESCRIPTION

**Documents brevets cités dans la description**

- WO 9412708 A
- EP 1798428 A
- US 20070193439 A
- WO 20060759961 A
- WO 9846817 A
- EP 0670921 A
- EP 179428 A
- WO 9215740 A

**Littérature non-brevet citée dans la description**

- ASM Handbook. ASM International, 2001
- **ROMAIN NUNEZ.** Problématique de la mesure de la perméabilité transverse de préformes fibreuses pour la fabrication de structures composites. Ecole Nationale Supérieure des Mines de Saint Etienne, 16 Octobre 2009